# EUROPÄISCHE PATENTANMELDUNG

(11) **EP 2 711 634 A1**
(43) Veröffentlichungstag der Anmeldung: **26.03.2014**
(21) Anmeldenummer: 12185436.8
(22) Anmeldetag: 21.09.2012
(51) Int. Cl.: F23R 3/00, F23R 3/60, F23M 5/04, F23M 5/08

(54) **Hitzeschild mit einer Tragstruktur und Verfahren zum Kühlen der Tragstruktur**

(71) Anmelder: Siemens Aktiengesellschaft, 80333 München (DE)
(72) Erfinder: Kluge, Andre, 48249 Dülmen (DE); Reich, Stefan, 40233 Düsseldorf (DE); Vogtmann, Daniel, 40227 Düsseldorf (DE)

(57) **Zusammenfassung**

Die Erfindung betrifft ein Hitzeschild für eine Brennkammer einer Gasturbine, mit einer Tragstruktur (16) und einer Anzahl von Hitzeschildsteinen, welche an der Tragstruktur (16) mittels Steinhaltern (2, 2a, 2b) lösbar befestigt sind, wobei jeder Steinhalter (2, 2a, 2b) mindestens einen Halteabschnitt (3) zur Befestigung an einem Hitzeschildstein und einen an der Tagstruktur (16) befestigbaren Befestigungsabschnitt (4) aufweist, wobei der Befestigungsabschnitt (4) an einer in der Tragstruktur (16) verlaufenden Befestigungs-Nut (18) befestigbar ist, wobei zum Schutz vor Heißgasen ein Kühlluftkanal (9) vorgesehen ist. Eine Kühlluft-Nut (1,22) ist zusätzlich zu den Befestigungs-Nuten (18) in der Tragstruktur (16) angeordnet, wobei die Kühlluft-Nut (1, 22) bei an der Tragstruktur (16) befestigten Hitzeschildsteinen in Längsrichtung (7) der Kühlluft-Nut (1, 22) teilweise überdeckt ist, so dass ein kanalförmiger Nutabschnitt (8) ausgebildet ist, in welchen ein Kühlluftkanal (9) mündet.

## Beschreibung

Die Erfindung bezieht sich auf ein Hitzeschild mit einer Tragstruktur und auf ein Verfahren zum Kühlen der Tragstruktur eines Hitzeschildes.

Die Erfindung betrifft auch eine Brennkammer mit einem derartigen Hitzeschild und eine Gasturbine.

In vielen technischen Anwendungen werden Hitzeschilde verwendet, welche Heißgasen von 1000 bis 1600 Grad Celsius widerstehen müssen. Insbesondere Gasturbinen, wie sie in stromerzeugenden Kraftwerken und in Flugzeugtriebwerken Verwendung finden, weisen entsprechend große durch Hitzeschilde abzuschirmende Flächen im Innern der Brennkammern auf. Wegen der thermischen Ausdehnung und wegen großer Abmessungen muss das Hitzeschild aus einer Vielzahl einzelner, im Allgemeinen keramischer Hitzeschildsteine zusammengesetzt werden, die voneinander mit einem ausreichenden Spalt beabstandet an einer Tragstruktur befestigt sind. Dieser Spalt bietet den Hitzeschildelementen ausreichenden Raum für die thermische Ausdehnung. Da jedoch der Spalt auch einen direkten Kontakt der heißen Verbrennungsgase mit der metallischen Tragstruktur und den Halteelementen ermöglicht, wird als eine Gegenmaßnahme durch die Spalte in Richtung der Brennkammer Kühlluft eingedüst.

Ein gattungsgemäßes Hitzeschild umfasst somit eine Tragstruktur und eine Anzahl von Hitzeschildsteinen, welche an der Tragstruktur mittels Steinhaltern lösbar befestigt sind, wobei jeder Hitzeschildstein eine der Tragstruktur zugewandte Kaltseite und eine der Kaltseite gegenüberliegende, mit einem heißen Medium beaufschlagbare Heißseite aufweist. Jeder der Steinhalter weist mindestens einen Halteabschnitt zur Befestigung an einem Hitzeschildstein und einen an der Tragstruktur befestigbaren Befestigungsabschnitt auf. Der Befestigungsabschnitt ist an einer in der Tragstruktur verlaufenden Befestigungs-Nut befestigbar. Zum Schutz vor Heißgasen ist mindestens eine Kühlluftbohrung in der Tragstruktur vorgesehen.

Zur Befestigung der Steinhalter an der Tragstruktur können in der Tragstruktur kreisförmig umlaufende und parallele Befestigungs-Nuten vorgesehen sein. Die Steinhalter werden in diesem Fall mit ihren Befestigungsabschnitten nacheinander in die Befestigungs-Nuten eingeschoben, wobei nachkommende Steinhalter die Position der vorher positionierten Steinhalter versperren. Auf diese Weise kann eine kreisförmig umlaufende Reihe von Hitzeschildsteinen an der Tragstruktur innerhalb einer Brennkammer einer Gasturbine befestigt werden.

Die EP 1 701 095 A1 offenbart ein Hitzeschild einer Brennkammer einer Gasturbine mit einer Tragstruktur und einer Anzahl von lösbar an der Tragstruktur angeordneten Hitzeschildsteinen. Zum Schutz der Brennkammerwand sind die Hitzeschildsteine flächendeckend unter Belassung von Dehnungsspalten an der Tragstruktur angeordnet, wobei jeder Hitzeschildstein eine der Tragstruktur zugewandte Kaltseite und eine der Kaltseite gegenüberliegende, mit einem heißen Medium beaufschlagbare Heißseite aufweist. Die Hitzeschildsteine sind mit je zwei metallischen Steinhaltern federnd an der Tragstruktur befestigt. Hierzu umfasst jeder Steinhalter einen Halteabschnitt in Form eines Greifabschnitts und einen Befestigungsabschnitt. In jeden Hitzeschildstein sind an zwei gegenüberliegenden Umfangsseiten Haltenuten oder -taschen eingebracht, so dass zum Halten des Hitzeschildsteins die Greifabschnitte der Steinhalter gegenüberliegend in die Haltenuten eingreifen können. Die derart am Hitzeschildstein gegenüberliegend befestigten Steinhalter sind mit ihrem Befestigungsabschnitt in einer unterhalb des Hitzeschildsteins verlaufenden Befestigungs-Nut in der Tragstruktur geführt. Zum Schutz vor Heißgasen sind die Greifabschnitte der metallischen Steinhalter gekühlt. Hierzu sind in die Steinhalter im Bereich des Halteabschnitts und in die Halteriegel der Hitzeschildsteine Öffnungen eingebracht, welche mit einer in der Tragstruktur angeordneten Kühlluftbohrung fluchten, so dass Kühlluft aus der Kühlluftbohrung strömend in direkter Linie auf eine Kaltseite des Greifabschnittes prallt.

Trotz dieser Kühlung der Greifabschnitte gemäß dem Stand der Technik kann es bei Beaufschlagung des Hitzeschildes mit Heißgas zu Heißgaseinzug im Bereich der Dehnungsspalten zwischen den Hitzeschildsteinen kommen. Das Heißgas kann sich sodann unterhalb des Hitzeschildes ausbreiten und zur Verzunderung der Tragstruktur führen.

Es ist daher Aufgabe der vorliegenden Erfindung, ein Hitzeschild mit einer Tragstruktur, eine Gasturbine mit einer Brennkammer mit einem derartigen Hitzeschild und ein Verfahren zur Kühlung der Tragstruktur anzugeben, mit welchem eine Verzunderung der Tragstruktur aufgrund von Heißgaseinzug besonders effektiv vermieden werden kann.

Die Aufgabe wird erfindungsgemäß bei einem Hitzeschild der eingangs genannten Art dadurch gelöst, dass zusätzlich zu den Befestigungs-Nuten mindestens eine Kühlluft-Nut in der Tragstruktur angeordnet ist. Die Kühlluft-Nut ist zumindest bei an der Tragstruktur befestigten Hitzeschildsteinen in Längsrichtung der Kühlluft-Nut teilweise überdeckt, so dass ein kanalförmiger Nutabschnitt ausgebildet ist, in welchen mindestens ein Kühlluftkanal mündet, so dass aus dem Kühlluftkanal ausströmende Kühlluft im Wesentlichen in Längsrichtung der Kühlluft-Nut umlenkbar ist.

Mit dem erfindungsgemäßen Hitzeschild ist eine Kühlung der Tragstruktur ermöglicht. Der Kühlluft wird hierbei mittels der Anordnung von Kühlluftkanal und teilweise überdeckter Kühlluft-Nut eine Ausströmrichtung aufgeprägt, welche eine Prallkühlung der Hitzeschildsteine vermeidet. Dadurch kann die Anordnung und der Verlauf der mindestens einen Kühlluft-Nut frei gewählt werden und insbesondere auch unterhalb der Hitzeschildsteine entlang der für die Befestigung der Hitzeschildsteine besonders wichtigen Bereiche der Tragstruktur geführt sein. Dies ermöglicht eine besonders effektive Kühlung der Tragstruktur. Die aus dem Kühlluftkanal strömende Kühlluft ist mittels der Überdeckung in Längsrichtung der Kühlluft-Nut umlenkbar und verlässt somit die Kühlluft-Nut stromab der Überdeckung mit einer Geschwindigkeitskomponente in Längsrichtung der Kühlluft-Nut. Durch diese schräge Ausströmrichtung der Kühlluft aus der Kühlluft-Nut ist eine vorteilhafte Einleitung der Kühlluft unter Vermeidung einer Prallkühlung der Hitzeschildsteine ermöglicht. Insbesondere kann die Kühlluft-Nut in der Tragstruktur unterhalb eines Hitzeschildsteines verlaufen und Kühlluft in den Zwischenraum unterhalb des Hitzeschildsteins einleiten. Der Begriff "Zwischenraum unterhalb der Hitzeschildsteine und oberhalb der Tragstruktur" bezeichnet hierbei den Zwischenraum, der sich von der Kaltseite der Hitzeschildsteine bis zu der, der Kaltseite der Hitzeschildsteine zugewandten Oberfläche der Tragstruktur erstreckt. Der Begriff "Tragstruktur unterhalb des Hitzeschildsteines" bezeichnet den Bereich der Tragstruktur, dem die Kaltseite des Hitzeschildsteines zugewandt ist.

In der Tragstruktur können beispielsweise mehrere erfindungsgemäße Kühlluft-Nuten aneinandergereiht oder getrennt voneinander über die Tragstruktur verteilt angeordnet sein. Die mindestens eine Kühlluft-Nut kann beispielsweise parallel zu oder innerhalb eines Nutbodens einer Befestigungs-Nut verlaufen. Sie könnte aber auch in einem anderen Bereich der Tragstruktur angeordnet sein. Die Kühlluft kann hierbei auf einen bevorzugt zu kühlenden Bereich der Tragstruktur gerichtet sein. Beispielsweise kann die Kühlluft-Nut im Wesentlichen mittig unter einem Hitzeschildstein verlaufen in einem Bereich, in dem mindestens ein Steinhalter mit seinem Befestigungsabschnitt an der Tragstruktur befestigt ist. Denn eine Beschädigung dieses Bereiches hat im schlimmsten Fall einen Verlust des vom Steinhalter gehaltenen Hitzeschildsteines zur Folge.

Die Kühlluft-Nut kann einen geraden oder einen anderen Verlauf aufweisen. Vorzugsweise ist der Verlauf aber gerade, da eine solche Kühlluft-Nut besonders einfach in die Tragstruktur eingebracht werden kann. Sofern die Kühlluft-Nut einen kurvigen Verlauf aufweist, ist mit Längsrichtung der Kühlluft-Nut die Richtung der jeweiligen Tangente an den Verlauf der Kühlluft-Nut bezeichnet.

Erfindungsgemäß ist die Kühlluft-Nut in Längsrichtung teilweise überdeckt, so dass ein kanalförmiger Nutabschnitt ausgebildet ist. Anstelle des Begriffs "überdeckt" könnte auch der Begriff "abgedeckt" verwendet werden. Der kanalförmige Nutabschnitt ist im Wesentlichen geschlossen, so dass die aus dem Kühlluftkanal strömende Kühlluft effektiv in die Kühlluft-Nut umlenkbar ist.

Das erfindungsgemäße Hitzeschild lässt sich beispielsweise dadurch realisieren, dass ein Kühlluftkanal und eine sich bis zu diesem erstreckende Kühlluft-Nut in die Tragstruktur eingebracht wird, so dass der Kühlluftkanal in die Nut mündet und die Kühlluft-Nut von dem Kühlluftkanal ausgehend teilweise überdeckt wird. Aufgrund ihrer einfachen Konstruktion eignet sich die Erfindung insbesondere auch für eine nachträgliche Einbringung der Kühlluft-Nut in ein bereits installiertes Hitzeschild. In diesem Fall kann zur Realisierung des erfindungsgemäßen Hitzeschildes ein bereits in der Tragstruktur vorhandener Kühlluftkanal genutzt werden.

Vorteilhafterweise kann vorgesehen sein, dass der nicht überdeckte Abschnitt der Kühlluft-Nut bei an der Tragstruktur angeordneten Hitzeschildsteinen unterhalb der Kaltseite eines Hitzeschildsteines und außerhalb eines von den Steinhaltern überragten Bereiches verläuft.

Auf diese Weise kann die aus der Kühlluft-Nut ausströmende Kühlluft in den Zwischenraum unterhalb des Hitzeschildes einströmen und sich dort verteilen. Damit lässt sich der Bereich der Tragstruktur unterhalb des Hitzeschildsteines effektiv kühlen. Die Kühlluft entweicht nicht sofort durch die zwischen den Hitzeschildsteinen angeordneten Dehnungsspalten.

Es kann auch als vorteilhaft angesehen werden, dass die Kühlluft-Nut in den Nutboden einer Befestigungs-Nut eingebracht ist.

Auf diese Weise ist eine besonders effektive Kühlung der Seitenwände der Befestigungs-Nut ermöglicht, welche der Befestigung der Steinhalter an der Tragstruktur dienen.

Weiter kann vorteilhaft vorgesehen sein, dass die Überdeckung mittels des Befestigungsabschnitts eines Steinhalters realisiert ist.

Diese Ausgestaltung der Erfindung weist einen besonders leicht zu realisierenden Aufbau auf. Die Überdeckung der Kühlluft-Nut wird hierbei bei Anordnung eines Hitzeschildsteines an der Tragstruktur realisiert, wobei ein den Hitzeschildstein haltender Steinhalter in Eingriff mit der Befestigungs-Nut gebracht und über die Kühlluft-Nut geschoben wird, so dass diese in Längsrichtung teilweise überdeckt ist. Zusätzliche Bauteile für eine Überdeckung der Kühlluft-Nut entfallen bei dieser Ausgestaltung. Dies reduziert die Kosten eines solchen Hitzeschildes.

Eine vorteilhafte Weiterbildung der Erfindung kann vorsehen, dass der nicht überdeckte Bereich der Kühlluft-Nut im Nutboden der Befestigungs-Nut im Bereich zwischen zwei Befestigungsabschnitten zweier gegenüberliegender Steinhalter verläuft.

Die Anordnung der Kühlluft-Nut gemäß dieser Weiterbildung eignet sich besonders gut zur Kühlung der für die Befestigung der Steinhalter vorgesehenen Ränder der Befestigungs-Nut. Gemäß dieser Weiterbildung verläuft die Kühlluft-Nut bei an der Tragstruktur befestigten Hitzeschildsteinen im Wesentlichen zentral unter einem Hitzeschildstein.

Es kann auch vorteilhaft vorgesehen sein, dass mindestens zwei nebeneinander verlaufende Kühlluft-Nuten in der Tragstruktur angeordnet sind, wobei die jeweilige Überdeckung der Kühlluft-Nuten an entgegen gesetzten Enden der beiden Kühlluft-Nuten angeordnet sind.

Die aus den beiden Kühlluft-Nuten ausströmende Kühlluft strömt somit in entgegen gesetzter Richtung. Diese Weiterbildung der Erfindung ermöglicht eine gleichmäßige Verteilung von Kühlluft über einem Bereich der Tragstruktur.

Vorteilhafterweise kann weiter vorgesehen sein, dass der Kühlluftkanal im Wesentlichen senkrecht zur Längsrichtung der Kühlluft-Nut in diese mündet.

Diese Ausrichtung des Kühlluftkanals ist besonders einfach in die Tragstruktur einzubringen. Die aus dem Kühlluftkanal strömende Kühlluft prallt somit senkrecht auf eine gegenüberliegend der Mündung angeordnete Seitenwand des kanalförmigen Nutabschnitts und wird in Längsrichtung der Kühlluft-Nut umgelenkt. Bei der Seitenwand kann es sich um eine einem Nutboden der Kühlluft-Nut zugewandte Unterseite eines Steinhalters handeln.

Es kann auch als vorteilhaft angesehen werden, dass die Kühlluft-Nut im Wesentlichen mittig unter dem Hitzeschildstein angeordnet ist.

Diese Ausgestaltung der Erfindung ermöglicht eine besonders lange Aufenthaltszeit der Kühlluft unter dem Hitzeschild unter Vermeidung einer Prallkühlung des Hitzeschildsteines. Somit ist eine effektive Kühlung der unter dem Hitzeschild angeordneten Tragstruktur ermöglicht, bevor die Kühlluft durch die Dehnungsfugen zwischen den Hitzeschildsteinen entweicht.

Eine weitere Aufgabe der Erfindung ist es, ein Verfahren zum Kühlen der Tragstruktur eines gattungsgemäßen Hitzeschildes anzugeben, mit welchem eine Verzunderung der Tragstruktur aufgrund von Heißgaseinzug besonders effektiv vermieden werden kann.

Hierzu wird zusätzlich zu den Befestigungs-Nuten mindestens eine weitere Nut als Kühlluft-Nut in die Tragstruktur eingebracht. Ein in die Kühlluft-Nut mündender Kühlluftkanal wird in die Tragstruktur eingebracht oder ist bereits angeordnet. Die Nut wird in Längsrichtung teilweise übergedeckt, so dass aus dem Kühlluftkanal ausströmende Kühlluft mittels der Überdeckung in Längsrichtung der Kühlluft-Nut umlenkbar ist.

Dies ermöglicht eine besonders effektive Kühlung der Tragstruktur unter Vermeidung einer Prallkühlung der Hitzeschildsteine.

Bezüglich der Vorteile und Ausgestaltungsmöglichkeiten des Verfahrens gilt analog das zu dem erfindungsgemäßen Hitzeschild Gesagte.

Mit dem erfindungsgemäßen Verfahren lässt sich besonders effektiv die Tragstruktur, insbesondere im Bereich der Befestigungsabschnitte der Steinhalter, kühlen. Das Verfahren kann beispielsweise im Rahmen einer Wartung eines bereits installierten Hitzeschildes angewendet werden, indem zusätzlich zu den Befestigungs-Nuten mindestens eine weitere Nut als Kühlluft-Nut in die Tragstruktur eingebracht wird und gemäß Anspruch 9 ausgestaltet wird.

Gemäß einer vorteilhaften Weiterbildung des Verfahrens kann vorgesehen sein, dass die Kühlluft-Nut im Bereich eines entfernten Hitzeschildsteines in die Tragstruktur eingebracht wird, so dass bei eingebautem Hitzeschildstein aus der Kühlluft-Nut stromab der Überdeckung strömende Kühlluft in einen Zwischenraum zwischen einer Kaltseite eines Hitzeschildsteins und der Tragstruktur einströmbar ist.

Hierbei kann vorteilhaft vorgesehen sein, dass die Kühlluft-Nut in einen Nutboden einer Befestigungs-Nut eingebracht wird.

Zur Überdeckung der Kühlluft-Nut kann beispielsweise mindestens ein Steinhalter mit seinem Befestigungsabschnitt über die Kühlluft-Nut geschoben werden, so dass diese in Längsrichtung teilweise überdeckt ist. Der nicht überdeckte Bereich der Kühlluft-Nut erstreckt sich im Wesentlichen mittig unter einem von dem Steinhalter gehaltenen Hitzeschildstein.

Der Begriff "mittig" ist hierbei nicht eng auszulegen. Er bezeichnet einen Bereich, der sich nicht unterhalb eines Randbereiches des Hitzeschildsteines befindet.

Eine weitere Aufgabe der Erfindung ist es, eine Brennkammer und eine Gasturbine mit mindestens einer Brennkammer anzugeben, welche eine besonders effektive Kühlung der Tragstruktur eines von der Brennkammer umfassten Hitzeschildes ermöglicht.

Die Aufgabe wird erfindungsgemäß gelöst, indem das Hitzeschild gemäß einem der Ansprüche 1 bis 8 ausgebildet ist.

Weitere zweckmäßige Ausgestaltungen und Vorteile der Erfindung sind Gegenstand der Beschreibung von Ausführungsbeispielen der Erfindung unter Bezug auf die Figur der Zeichnung, wobei gleiche Bezugszeichen auf gleich wirkende Bauteile verweisen.

Dabei zeigt die
- Fig.1: eine schematische Darstellung einer Kühlluft-Nut und eines Steinhalters eines erfindungsgemäßen Hitzeschildes gemäß einem Ausführungsbeispiel in perspektivischer Ansicht,
- Fig.2: einen Ausschnitt des erfindungsgemäßen Hitzeschildes im Bereich einer Befestigungs-Nut und der in Fig.1 dargestellten Kühlluft-Nut in einer schematischen Schnittansicht, und
- Fig.3: den in Fig.2 dargestellten Ausschnitt in einer Draufsicht.

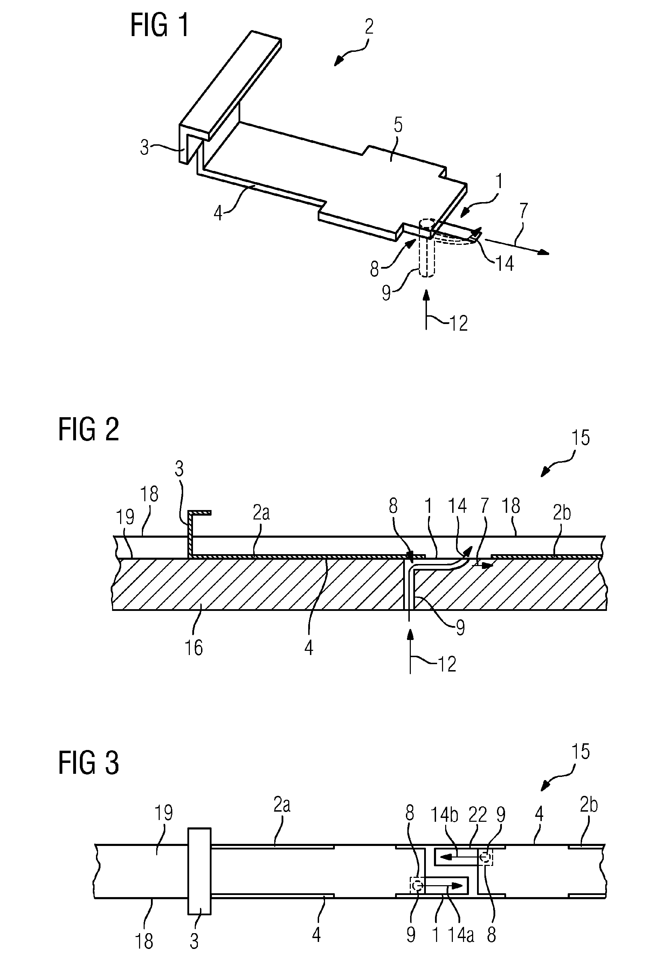

Die Figur 1 zeigt schematisch eine Kühlluft-Nut 1 und einen Steinhalter 2 gemäß einem Ausführungsbeispiel des erfindungsgemäßen Hitzeschildes. Der Steinhalter 2 umfasst einen Halteabschnitt 3, welcher rechtwinkelig an einem Befestigungsabschnitt 4 angeordnet ist. Der Befestigungsabschnitt 4 ist an einem vom Halteabschnitt 3 abgewandten Ende verbreitert, so dass ein sog. Schuh 5 ausgebildet ist. Die Kühlluft-Nut 1 erstreckt sich in eine Längsrichtung 7, wobei die Kühlluft-Nut in der Längsrichtung 7 teilweise von dem Befestigungsabschnitt 4 überdeckt ist, so dass der teilweise überdeckte Bereich der Kühlluft-Nut einen kanalförmigen Nutabschnitt 8 ausbildet. In den kanalförmigen Nutabschnitt 8 mündet ein Kühlluftkanal 9. Der Kühlluftkanal 9 mündet senkrecht zur Längsrichtung 7 in die Kühlluft-Nut ein. Kühlluft, welche in Strömungsrichtung 12 durch den Kühlluftkanal 9 strömt, gelangt in den kanalförmigen Nutabschnitt 8 und wird aufgrund der Überdeckung der Kühlluft-Nut durch den Steinhalter 2 in Längsrichtung 7 der Kühlluft-Nut umgelenkt, so dass die Kühlluft stromab des kanalförmigen Nutabschnitts 8 die Kühlluft-Nut in einer Ausströmrichtung 14 verlässt. Der Kühlluftstrom hat hierbei eine Geschwindigkeitskomponente in Längsrichtung 7 der Kühlluft-Nut. Durch diese schräge Ausströmrichtung 14 der Kühlluft aus der Kühlluft-Nut ist eine vorteilhafte Einleitung der Kühlluft unter Vermeidung einer Prallkühlung von Strukturen oberhalb der Kühlluft-Nut ermöglicht.

Die Figur 2 zeigt einen Ausschnitt eines erfindungsgemäßen Hitzeschildes 15 im Bereich der in Fig. 1 dargestellten Kühlluft-Nut 1 in einer Schnittansicht. Der Hitzeschild 15 umfasst eine Tragstruktur 16, wobei der Schnitt der Ansicht durch eine in die Tragstruktur 16 eingebrachte Befestigungs-Nut 18 verläuft. In der Befestigungs-Nut 18 ist im dargestellten Abschnitt ein Steinhalter 2a und ein Steinhalter 2b angeordnet. Die Steinhalter 2a, 2b liegen jeweils mit ihrem Befestigungsabschnitt 4 auf einem Nutboden 19 der Befestigungs-Nut 18 auf.
Bei dem dargestellten Ausführungsbeispiel greift zur Befestigung der Steinhalter 2a, 2b an der Tragstruktur 16 ein verbreiterter Abschnitt des Befestigungsabschnitts 4, der sog. Schuh des Steinhalters, eng toleriert in eine parallel zur Oberfläche der Tragstruktur verlaufende Verbreiterung des Nutgrundes ein. Der nicht verbreiterte Bereich des Befestigungsabschnitts 4 kann ungehindert in der Befestigungs-Nut 18 angehoben werden. Die jeweils senkrecht an dem Befestigungsabschnitt 4 angeordneten Halteabschnitte 3 der Steinhalter ragen hierbei aus der Befestigungs-Nut 18 heraus und halten einen nicht dargestellten Hitzeschildstein. Da die Steinhalter im Allgemeinen aus Metall bestehen, lässt sich auf diese Weise ein von Steinhaltern gehaltener Hitzeschildstein federnd an der Befestigungs-Nut 18 befestigen.

In die Tragstruktur 16 ist in den Nutboden 19 der Befestigungs-Nut 18 eine Kühlluft-Nut 1 eingebracht. Diese wird in der dargestellten Position des Steinhalters 2a von dem Befestigungsabschnitts 4 in Längsrichtung 7 der Kühlluft-Nut 1 teilweise überdeckt. Der nicht überdeckte Bereich der Kühlluft-Nut 1 verläuft somit im Nutboden 19 der Befestigungs-Nut 18 im Bereich zwischen zwei Befestigungsabschnitten 4 zweier gegenüberliegender Steinhalter 2a, 2b und unterhalb der Kaltseite eines von den beiden Steinhaltern gehaltenen Hitzeschildsteines (nicht dargestellt) und außerhalb eines von den Steinhaltern 2a, 2b überragten Bereiches. Bei dem dargestellten Ausführungsbeispiel verläuft die Kühlluft-Nut 1 auch im Wesentlichen mittig unter einem von den Steinhaltern 2a, 2b gehaltenen Hitzeschildstein (nicht dargestellt).

Mittels der Überdeckung ist ein kanalförmiger Nutabschnitt 8 ausgebildet. In diesen mündet senkrecht zur Längsrichtung 7 ein Kühlluftkanal 9. Kühlluft, welche in einer Strömungsrichtung 12 durch den Kühlluftkanal 9 strömt, wird mittels der Überdeckung in Längsrichtung 7 der Kühlluft-Nut 1 umgelenkt und verlässt stromab der Überdeckung die Kühlluft-Nut 1 in einer Ausströmrichtung 14, welche beispielhaft mit einem Pfeil gekennzeichnet ist. Bei an den Steinhaltern 2a, 2b befestigtem Hitzeschildstein tritt die Kühlluft in einen Zwischenraum zwischen der Kaltseite des Hitzeschildsteines und der Tragstruktur ein, wodurch eine effektive Kühlung der Tragstruktur ermöglicht ist. Eine Prallkühlung des Hitzeschildsteines ist hierbei sicher vermieden.

Die Figur 3 zeigt das in Figur 2 dargestellte Ausführungsbeispiel in einer Draufsicht. In dieser Darstellung ist zusätzlich zu der in Figur 2 dargestellten Kühlluft-Nut 1 eine weitere Kühlluft-Nut 22 im Nutboden 19 der Befestigungs-Nut 18 angeordnet. Die beiden Kühlluft-Nuten 1, 22 verlaufen nebeneinander in der Tragstruktur, wobei deren Überdeckungen an entgegen gesetzten Enden der Kühlluft-Nuten angeordnet sind. Die aus den beiden Kühlluft-Nuten austretende Kühlluft strömt somit in entgegen gesetzter Richtung 14a, 14b und verteilt sich gleichmäßig über die Randbereiche der Befestigungs-Nut 18, welche der Befestigung der Steinhalter 2a, 2b dienen. Hierdurch wird einem Verlust eines von den Steinhaltern gehaltenen Hitzeschildsteines besonders effektiv vorgebeugt.

## Patentansprüche

1. Hitzeschild (15) für eine Brennkammer einer Gasturbine, mit einer Tragstruktur (16) und einer Anzahl von Hitzeschildsteinen, welche an der Tragstruktur (16) mittels Steinhaltern (2, 2a, 2b) lösbar befestigt sind, wobei jeder Hitzeschildstein eine der Tragstruktur (16) zugewandte Kaltseite und eine der Kaltseite gegenüberliegende, mit einem heißen Medium beaufschlagbare Heißseite aufweist, und jeder Steinhalter (2, 2a, 2b) mindestens einen Halteabschnitt (3) zur Befestigung an einem Hitzeschildstein und einen an der Tagstruktur (16) befestigbaren Befestigungsabschnitt (4) aufweist, wobei der Befestigungsabschnitt (4) an einer in der Tragstruktur (16) verlaufenden Befestigungs-Nut (18) befestigbar ist, wobei zum Schutz vor Heißgasen mindestens ein Kühlluftkanal (9) vorgesehen ist,
**dadurch gekennzeichnet, dass** zusätzlich zu den Befestigungs-Nuten (18) mindestens eine Kühlluft-Nut (1, 22) in der Tragstruktur (16) angeordnet ist, wobei die Kühlluft-Nut (1, 22) zumindest bei an der Tragstruktur (16) befestigten Hitzeschildsteinen in Längsrichtung (7) der Kühlluft-Nut (1, 22) teilweise überdeckt ist, so dass ein kanalförmiger Nutabschnitt (8) ausgebildet ist, in welchen mindestens ein Kühlluftkanal (9) mündet, so dass aus dem Kühlluftkanal (9) ausströmende Kühlluft im Wesentlichen in Längsrichtung (7) der Kühlluft-Nut (1, 22) umlenkbar ist.

2. Hitzeschild (15) nach Anspruch 1,
**dadurch gekennzeichnet, dass** der nicht überdeckte Bereich der Kühlluft-Nut (1, 22) bei an der Tragstruktur (16) angeordneten Hitzeschildsteinen unterhalb der Kaltseite eines Hitzeschildsteines und außerhalb eines von den Steinhaltern (2, 2a, 2b) überragten Bereiches verläuft.

3. Hitzeschild (15) nach Anspruche 1 oder 2,
**dadurch gekennzeichnet, dass** die Kühlluft-Nut (1, 22) in den Nutboden (19) einer Befestigungs-Nut (18) eingebracht ist.

4. Hitzeschild (15) nach Anspruch 3,
**dadurch gekennzeichnet, dass** die Überdeckung mittels des Befestigungsabschnitts (4) eines Steinhalters (2, 2a, 2b) realisiert ist.

5. Hitzeschild (15) nach Anspruch 3 oder 4,
**dadurch gekennzeichnet, dass** der nicht überdeckte Bereich der Kühlluft-Nut (1, 22) im Nutboden (19) der Befestigungs-Nut (18) im Bereich zwischen zwei Befestigungsabschnitten (4) zweier gegenüberliegender Steinhalter (2a, 2b) verläuft.

6. Hitzeschild (15) nach einem der vorhergehenden Ansprüche, **gekennnzeichnet durch**
mindestens zwei nebeneinander verlaufende Kühlluft-Nuten (1, 22) in der Tragstruktur (16), deren Überdeckungen an entgegen gesetzten Enden der Kühlluft-Nuten (1, 22) angeordnet sind.

7. Hitzeschild nach einem der vorhergehenden Ansprüche,
**dadurch gekennzeichnet, dass** der Kühlluftkanal (9) im Wesentlichen senkrecht zur Längsrichtung (7) der Kühlluft-Nut (1, 22) in diese mündet.

8. Hitzeschild (15) nach einem der vorhergehenden Ansprüche,
**dadurch gekennzeichnet, dass** die Kühlluft-Nut (1, 22) im Wesentlichen mittig unter dem Hitzeschildstein angeordnet ist.

9. Verfahren zum Kühlen der Tragstruktur (16) eines Hitzeschildes (15), welches eine Anzahl von an der Tragstruktur (16) lösbar befestigbaren Hitzeschildsteinen umfasst, wobei die Hitzeschildsteine mittels Steinhaltern (2, 2a, 2b) an der Tragstruktur (16) in Befestigungs-Nuten (18) befestigbar sind,
**dadurch gekennzeichnet, dass** zusätzlich zu den Befestigungs-Nuten (18) mindestens eine weitere Nut als Kühlluft-Nut (1, 22) in die Tragstruktur (16) eingebracht wird, wobei mindestens ein in die Kühlluft-Nut (1, 22) mündender Kühlluftkanal (9) in die Tragstruktur (16) eingebracht wird oder bereits angeordnet ist, und die Kühlluft-Nut (1, 22) in Längsrichtung (7) teilweise überdeckt wird, so dass aus dem Kühlluftkanal (9) ausströmende Kühlluft mittels der Überdeckung in Längsrichtung (7) der Kühlluft-Nut umlenkbar ist.

10. Verfahren nach Anspruch 9,
**dadurch gekennzeichnet, dass** die Kühlluft-Nut (1, 22) im Bereich eines entfernten Hitzeschildsteines in die Tragstruktur (16) eingebracht wird, so dass bei eingebautem Hitzeschildstein aus der Kühlluft-Nut (1, 22) stromab der Überdeckung strömende Kühlluft in einen Zwischenraum zwischen einer Kaltseite eines Hitzeschildsteins und der Tragstruktur (16) einströmbar ist.

11. Verfahren nach Anspruch 9 oder 10,
**dadurch gekennzeichnet, dass** die Kühlluft-Nut (1, 22) in einen Nutboden (19) einer Befestigungs-Nut (18) eingebracht wird.

12. Verfahren nach Anspruch 11,
**dadurch gekennzeichnet, dass** zur Überdeckung der Kühlluft-Nut (1, 22) mindestens ein Steinhalter (2, 2a, 2b) mit seinem Befestigungsabschnitt (4) über die Kühlluft-Nut (1, 22) geschoben wird, so dass diese in Längsrichtung (7) teilweise überdeckt ist, und der nicht überdeckte Bereich der Kühlluft-Nut (1, 22) sich im Wesentlichen mittig unter einem von dem Steinhalter (2, 2a, 2b) gehaltenen Hitzeschildstein erstreckt.

13. Brennkammer, welche mit einem Hitzeschild (15) ausgekleidet ist,
**dadurch gekennzeichnet, dass** das Hitzeschild (15) gemäß einem der Ansprüche 1 bis 8 ausgebildet ist.

14. Gasturbine mit mindestens einer Brennkammer, **dadurch gekennzeichnet, dass** mindestens eine Brennkammer nach Anspruch 13 ausgebildet ist.
